Europäisches Patentamt

European Patent Office

Office européen des brevets

(19)

(11) Numéro de publication: **0 027 766**
**B1**

(12) **FASCICULE DE BREVET EUROPEEN**

(45) Date de publication du fascicule du brevet:
21.09.83

(51) Int. Cl.³: **G 06 F 15/20**

(21) Numéro de dépôt: **80401482.7**

(22) Date de dépôt: **17.10.80**

(54) **Système de production numérique d'images animées de cibles identiques pour incrustation électronique dans une image de paysage.**

(30) Priorité: **18.10.79 FR 7925876**

(43) Date de publication de la demande:
**29.04.81 Bulletin 81/17**

(45) Mention de la délivrance du brevet:
**21.09.83 Bulletin 83/38**

(84) Etats contractants désignés:
**BE DE IT NL**

(56) Documents cités:
**US-A-3 816 726**
**US-A-4 045 789**

(73) Titulaire: **THOMSON-CSF, 173, Boulevard Haussmann, F-75379 Paris Cedex 08 (FR)**

(72) Inventeur: **Maiardier, Pierre René, "THOMSON-CSF" SCPI 173 Boulevard Haussmann, F-75360 Paris Cedex 08 (FR)**
Inventeur: **Deslypper, Christian Roger René, "THOMSON-CSF" SCPI 173 Boulevard Haussmann, F-75360 Paris Cedex 08 (FR)**

(74) Mandataire: **Chaverneff, Vladimir et al, THOMSON-CSF SCPI 173, Bid Haussmann, F-75379 Paris Cedex 08 (FR)**

ACTORUM AG

### Système de production numérique d'images animées de cibles identiques
### pour incrustation électronique dans une image de paysage

L'invention se rapporte à un système de production numérique d'images animées de cibles identiques pour incrustation électronique dans une image de paysage, en particulier pour simulateurs d'entrainement au tir au canon.

Dans les simulateurs actuels de char de combat, une image de paysage est produite sur l'écran d'un dispositif de visualisation, et présentée à l'élève-tireur dans la lunette du char d'exercice, au moyen d'un dispositif de couplage optique à collimation. Sur cette image apparait une cible mobile sur laquelle, au moyen de commandes simulant les commandes réelles du char et en relation avec un calculateur, l'élève s'exerce à la visée et au tir. Limage de cible est incrustée dans l'image de paysage suivant un procédé quelconque connu, par exemple au moyen d'une caméra de télévision orientée sur une maquette. La présentation de plusieurs cibles selon ce principe, exige autant de caméras orientées respectivement sur autant de maquettes distinctes de cibles et devient onéreuse avec l'accroissement du nombre de cibles, en raison des coûts: des caméras, des optiques à grossissement variable et des systèmes d'asservissement qui assurent l'animation des maquettes.

On connait d'àprès le brevet US-A-4 045 789 un dispositif permettant de stocker sous forme numérique dans une mémoire un certain nombre d'images d'une maquette dans des positions différentes. Ces images sont combinées avec d'autres informations vidéo de manière à ce que les images de maquette soient incrustées dans le reste de l'image. Toutefois, les donées numériques correspondant à ces différentes images de maquette sont lues dans une mémoire et utilisées, sans traitement intermédiaire particulier, pour l'incrustation, ce qui ne permet pas de faire varier les dimensions de l'image numérisée de l'objet à incruster en fonction de la distance de celui-ci à l'observateur, ce qui est contraire au but recherché pour un simulateur tel qu'un simulateur de chars de combat.

Le système selon l'invention est conçu pour un simulateur de tir «en peloton» dans lequel doivent être représentés plusieurs chars de combat identiques mais animés de mouvement propres. S'il permet d'ailleurs de faire figurer, de manière économique, par exemple, une dizaine de cibles identiques dans l'image de paysage, il peut éventuellement, de manière relativement souple, faire figurer des cibles de deux types sans qu'il en résulte une augmentation prohibitive de coût. La description qui suit se rapporte, pour la simplification de l'explication, à la représentation de cibles identiques.

Dans le système selon l'invention, $n$ images de cibles incrustées dans une image de paysage sont produites, à partir de $m$ images de maquette de cible numérisées et assimilées à des ensembles d'éléments lumineux disposés suivant un premier quadrillage défini par le procédé de numérotation utilisé et limité par un contour d'image de maquette rectangulaire et exinscrit au contour apparent de la cible considérée; chacune des images de maquette correspondant à une attitude particulière d'une maquette; la cible étant supposée située à une distance de référence de l'observateur et vue par celui-ci au moyen d'une lunette réglée avec un grossissement de référence.

Dans le système selon l'invention, la détermination de l'intensité lumineuse de chaque élément lumineux d'une image de cible, consiste: à superposer au premier quadrillage appartenant à l'image de maquette qui est associée à l'image de cible considérée, un troisième quadrillage homothétique au deuxième quadrillage suivant un second rapport d'homothétie égal à $k$, et limité par un contour identique au contour d'image de maquette; et à égaler l'intensité lumineuse de chaque élément du deuxième quadrillage, à la somme des intensités lumineuses divisées par $k^2$, des éléments et des fractions d'éléments du premier quadrillage délimités par lélément particulier du troisième quadrillage qui est l'homologue de l'élément du deuxième quadrillage considéré, suivant le second rapport d'homothétie.

Dans le système selon l'invention, les images de cibles sont assimilées à des ensembles d'éléments lumineux disposés suivant un deuxième quadrillage identique au premier quadrillage mais limité par un contour homothétique au contour d'image de maquette suivant un premier rapport d'homothétie égal à $l/k$; la grandeur $k$ étant une fonction, d'une part, du rapport entre la distance effective de la cible simulée et la distance de référence, et d'autre part, du rapport entre le grossissement effectif de la lunette et le grossissement de référence.

Dans le système selon l'invention, les dimensions des éléments et des fractions d'éléments du premier quadrillage délimités par chaque élément de troisième quadrillage, sont calculées en fonction de valeurs arrondies de $k$ et des coordonnées du centre de l'élément de troisième quadrillage considérées par rapport à l'élément du premier quadrillage dans lequel le centre se trouve situé, puis, après avoir été divisées par $k$, sont enregistrées dans des tables qui les fournissent au fur et à mesure du calcul des images.

Dans le système selon l'invention, le calcul de l'intensité lumineuse divisée par $k^2$, de chaque élément on de chaque fraction d'élément du premier quadrillage comprend, entre autres, un premier produit effectué entre les deux dimensions divisées chacune par $k$, de l'élément ou de la fraction d'élément considéré, et un second produit effectué entre le premier produit et la luminance de cet élément ou de cette fraction d'élément.

Dans la système selon l'invention, les calculs du premier produit et du second produit sont effectués par un opérateur spécialisé câblé.

D'autres particularités du système de production numérique d'images selon l'invention, apparaitront dans la description de l'exemple de réalisation qui fait suite, exemple pris à titre non limitatif et illustré per le dessin annexé, sur lequel:

la fig. 1 représente les différents itinéraires, sur le terrain, des cibles simulées,

la fig. 2 est un schéma classique de système de numérisation d'images;

la fig. 3 représente le premier quadrillage limité par un rectangle exinscrit au contour de la maquette;

la fig. 4 représente, sur l'écran du dispositif de visualisation, l'image finale constituée par une image de paysage dans laquelle des images de cibles sont incrustées et repérées chacune par son point de début d'incrustation;

la fig. 5 représente le troisième quadrillage 3 superposé au premier quadrillage 1;

la fig. 6 représente un élément quelconque du troisième quadrillage délimitant un certain nombre d'éléments et de fractions d'éléments du premier quadrillage;

la fig. 7 est un tableau des longueurs des côtés $a$ des éléments et des fractions d'éléments du premier quadrillage délimités par un élément du troisième quadrillage en fonction de l'abscisse $x$ du centre de cet élément;

la fig. 8 est un schéma général d'un exemple de réalisation du système selon l'invention;

les fig. 9, 10, 11, 12, 13 et 14 sont différents schémas détaillés du système selon l'invention relatifs à celui de la fig. 8;

la fig. 15 est un chronogramme général du système selon l'invention,

et les fig 16, 17 et 18 sont des chronogrammes détaillés relatifs à celui de la fig. 15.

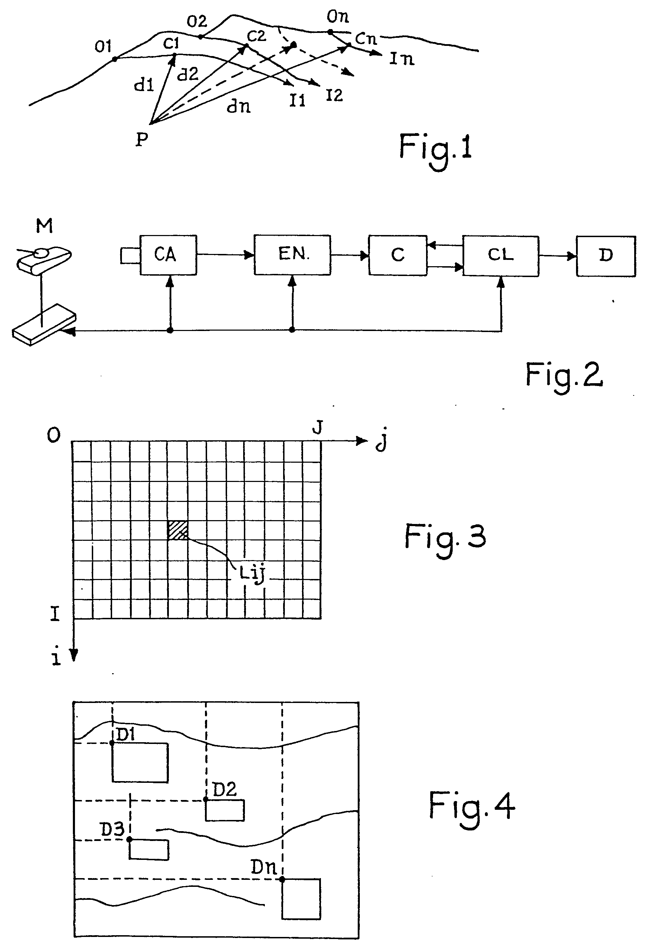

Au cours des exercices d'entrainement, l'action qui est supposée se dérouler sur le terrain (fig. 1) et que, dans la simulation, l'élève-tireur observe au moyen d'une lunette, consiste par exemple, dans le passage de plusieurs cibles C1, C2 . . . Cn, en l'occurence des chars de combat, suivant des itinéraires prédéterminés I1, I2, . . . In. Les cibles se déplacent, à partir des points O1, O2 . . . On, à des vitesses, variables éventuellement, déterminées par un instructeur. Elles sont situées à des distances d1, d2, . . . dn, du point P où est supposé placé le char de l'élève-tireur. Les déplacements sont calculés par des moyens de calcul qui assimilent les itinéraires à des lignes brisées formées de segments jointifs prédéterminés, sur chacun desquels l'attitude de chaque cible est invariable.

Le rôle du système selon l'invention consiste, au cours de chaque balayage d'image du dispositif de visualisation, à produire $n$ images de cibles en fonction du déroulement de l'action sur le terrain, à partir de $m$ images numérisées de maquette et (fig. 4) à incruster les $n$ images de cibles calculées au cours du balayage précédent, dans l'image de paysage et à partir de points de début d'incrustation D1, D2, . . . Dn dont les coordonnées sont déterminées par les positions relatives des cibles et du tireur.

Un système classique (fig. 2) qui comprend, par exemple: une caméra CA, un ensemble de numérisation EN, un coupleur C, un calculateur CL, et un disque D, permet d'obtenir sur le disque D, $m$ images numérisées d'une maquette M.

Selon l'invention, un ensemble de $m$ images de maquette, numérisées, sont rangées sous forme de $m$ groupes de premières données numériques dans des moyens de stockage et correspondent à $m$ attitudes différentes de la maquette, ces moyens de stockage sont, par exemple, un disque magnétique de calculateur. Du fait de la numérisation, chaque image de maquette est assimilée à un ensemble d'éléments lumineux disposés suivant un premier quadrillage défini par le procédé de numérisation et pour chacun desquels la luminance $L_{ij}$ est uniforme (fig. 3). Cet ensemble d'éléments est limité par un contour d'image de maquette, rectangulaire, exinscrit au contour de la cible dans l'attitude considérée, et comprend I lignes et J colonnes d'éléments lumineux suivant deux axes Oi et Oj. La grandeur des images de maquette correspond à un grossissement de référence de la lunette et à une distance de référence à laquelle la cible est supposée située. Les premières données numériques comprennent, pour chaque image de maquette: un premier mot I donnant le nombre de lignes, un deuxième mot J donnant le nombre de colonnes (ou d'éléments par ligne), ainsi qu'une liste de mots représentant respectivement la valeur de la luminance des éléments du premier quadrillage considérés successivement dans l'ordre des lignes et des colonnes.

Les images de cibles sont chacune formées par un ensemble d'éléments lumineux disposés suivant un deuxième quadrillage identique au premier quadrillage mais limité par un contour homothétique au contour d'image de maquette suivant un premier rapport d'homothétie égal à I/k; la grandeur $k$ étant une fonction, d'une part, du rapport entre la distance effective de la cible simulée et la distance de référence, et d'autre part, du rapport entre le grossissement effectif de la lunette et le grossissement de référence. Cette fonction peut être définie aisément à partir des lois de l'optique classique.

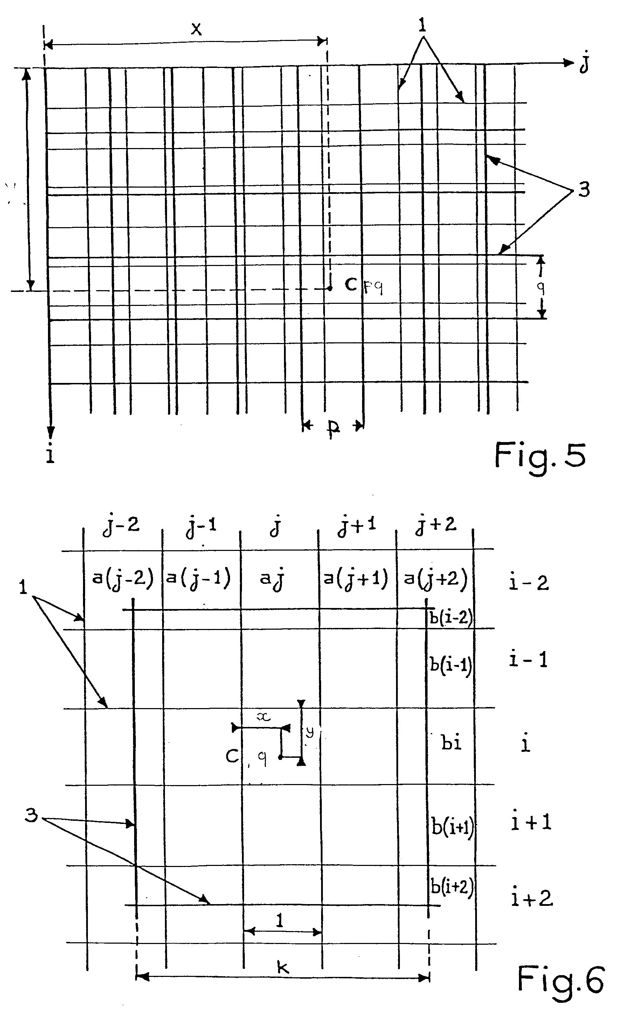

La détermination de l'intensité lumineuse de chaque élément lumineux d'une image de cible consiste: à superposer (fig. 5) au premier quadrillage I appartenant à l'image de maquette qui est associée à l'image de cible considérée, un troisième quadrillage 3 homothétique au premier quadrillage et au deuxième quadrillage suivant un second rapport d'homothétie égal à $k$ et limité par un contour (non représenté sur la fig. 5) identique au contour d'image de maquette; et à égaler (fig. 6) l'intensité lumineuse de chaque élément du deuxième quadrillage, à la somme des intensités lumineuses divisées par $k^2$, des éléments et des fractions d'éléments du premier quadrillage délimités par l'élément particulier du troisième quadrillage qui est l'homologue suivant le second rapport d'homothétie de l'élément considéré du deuxième quadrillage.

Les éléments et les fractions d'éléments du premier quadrillage délimités par un élément du troisième quadrillage sont par la suite, par simplification, désignés sous le terme unique de «parcelles». Les dimensions des éléments du premier quadrillage sont considérées comme étant égales à l'unité tandis que les dimensions' des éléments du troisième quadrillage sont par conséquent égales à $k$.

Le centre Cpq de chaque élément du troisième quadrillage est repéré dans ce troisième quadrillage comme étant à l'intersection de la qième ligne et de la pième colonne (fig. 5). Il est situé à l'intérieur d'un élément déterminé du premier quadrillage et repéré par rapport à cet élément par les coordonées $x$ et $y$ (fig. 6). Ces coordonnées $x$ et $y$ sont reliées aux coordonnées X et Y du centre considéré, par rapport aux axes Oi et Oj du premier quadrillage, par les deux relations:
$$X = pk + k/2 = j + x$$
$$Y = qk + k/2 = i + y$$
dans lesquelles:
p et q $\geq \phi$ sont incrémentés; $k$ est déterminé par la distance de la cible et le grossissement de la lunette; $i$ et $j$ sont les parties entières et x et $y$ sont les parties fractionnaires des valeurs calculées de X et Y.

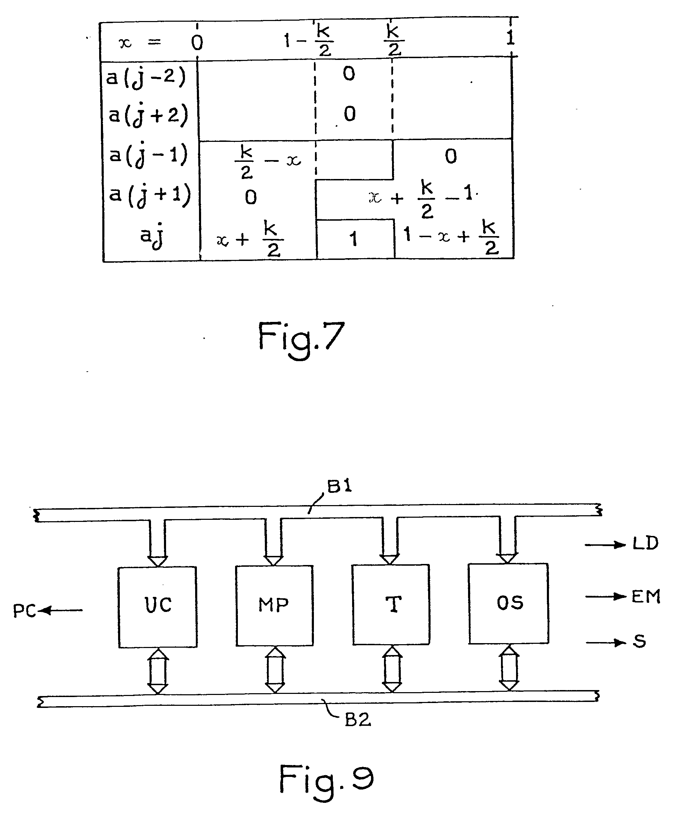

Le premier quadrillage partage les côtés de chaque élément du troisième quadrillage en segments repérables par les indices des éléments du premier quadrillage dans lesquels ces segments se trouvent situés. Le nombre de ces segments dans un élément de troisième quadrillage dépend de la valeur de $k$. Sur la fig. 6, par exemple, cette valeur est comprise entre 3 et 4. Les segments «horizontaux», ou traverses $a$ (fig. 6), sont désignés par les notations: a(j — 2), a(j — 1), aj, a(j + 1), a(j + 2), tandis que les segments «verticaux», ou montants $b$, sont désignés par les notations: b(i — 2), b(i — 1), bi, b(i + 1), b(i + 2). La longueur des segments qui constituent les dimensions des parcelles, sont facilement calculables en fonction de $x$, $y$ et $k$. Pour chaque élément de troisième quadrillage auquel correspond un ensemble particulier de valeurs $m$, $n$ et $k$, les relations 1 et 2 précédentes fournissent les valeurs de $i$, $j$, x et $y$; $x$ et $y$ étant nécessairement inférieures à (1). Le tableau de la fig. 7 donne, par exemple, les longueurs des traverses $a$ en fonction de $x$, lorsque $1 \leq k < 2$.

Selon l'invention, le calcul des longueurs des segments $a$ et $b$, est effectué, une fois pour toutes, pour un ensemble de valeurs discrètes $k'$, $x'$, $y'$ de $k$, $x$ et $y$. Les longueurs calculées sont divisées par $k$ puis enregistrées dans des tables qui les fournissent au fur et à mesure du calcul des images. Dans la suite du texte, les notations $a$ et $b$ sont utilisées, par simplification, aussi bien pour désigner les segments eux-mêmes, que leurs longueurs divisées par $k$.

Les intensités lumineuses des éléments des deuxième quadrillages, c'est-à-dire des éléments d'images de cibles, sont ainsi déterminées en rapport avec les éléments homologues des troisièmes quadrillages. Dans le cas de la fig. 6, ces intensités sont données par la relation:
$$Imn = \sum_{i-2}^{i+2} \sum_{j-2}^{j+2} aj \cdot bi \cdot Lij$$
Lij étant la luminance de l'élément d'indices i et j du premier quadrillage.

Les parcelles forment dans l'élément du troisième quadrillage une matrice à $c$ colonnes délimitant $c$ traverses $a$ par ligne et à l lignes délimitant l montants $b$ par colonne. Les calculs des intensités lumineuses des parcelles sont effectués, en fonction des positions de ces dernières dans la matrice en les considérant successivement, colonne par colonne, et simulatément à l'intérieur de chaque colonne. Les surfaces des parcelles, égales aux produits des dimensions des montants par celles des traverses, ainsi que les intensités lumineuses des parcelles divisées par $k^2$, sont calculées à chaque période de balayage d'image du dispositif de visualisation, pour chaque image de cible et pour chaque élément du troisième quadrillage.

Selon l'invention, un circuit spécialisé câblé effectue, pour chaque élément du troisième quadrillage et dans des conditions qui seront décrites par la suite, d'abord un premier produit P égal à aj . bi et ensuite un second produit égal à P . Lij.

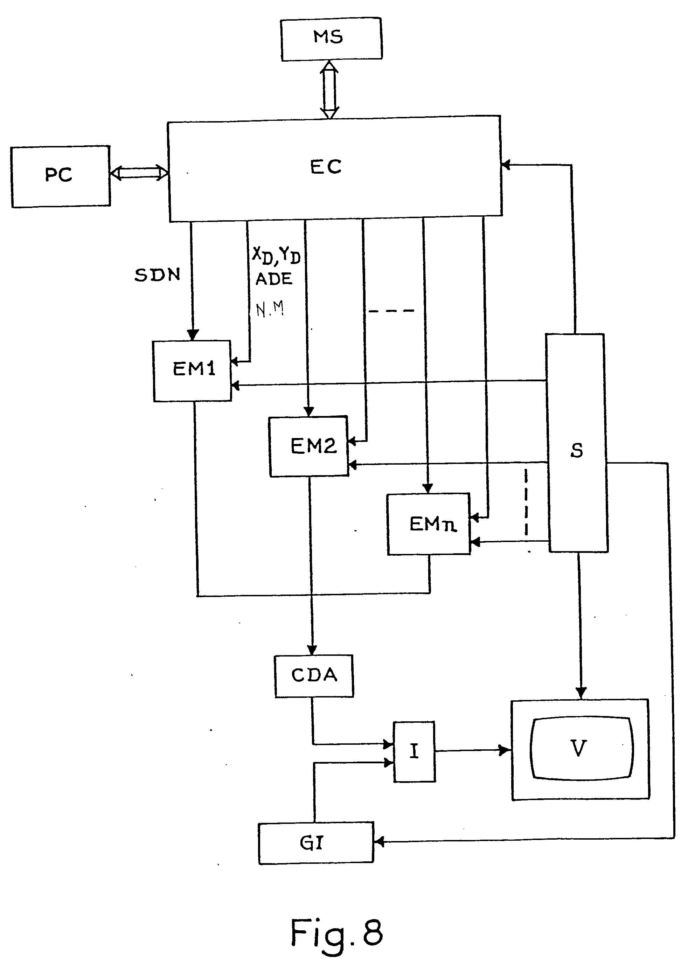

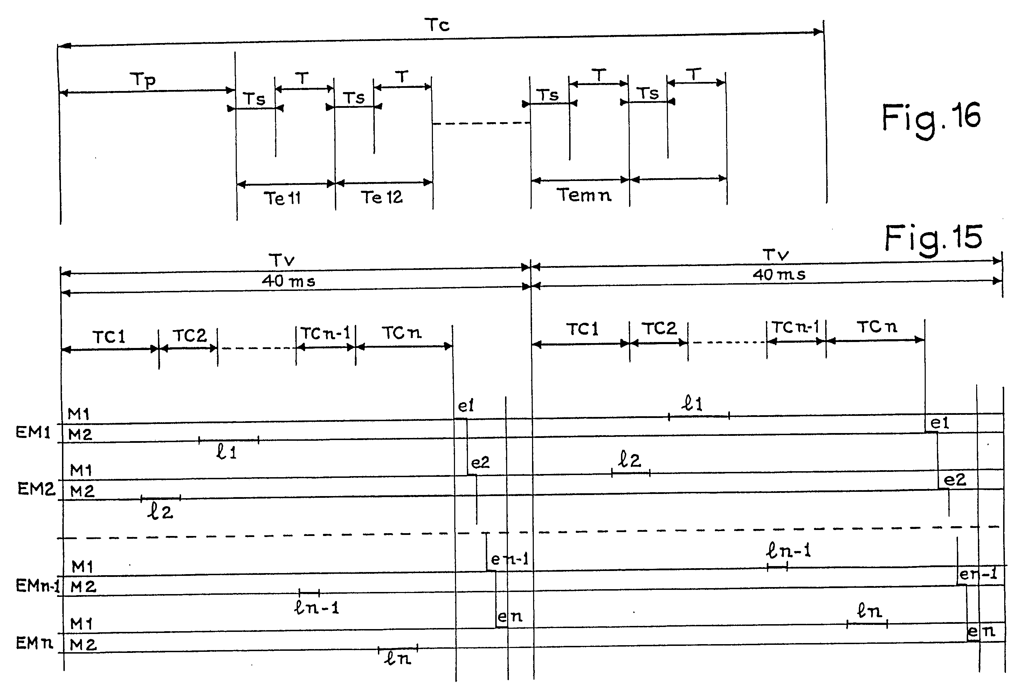

Le schéma général (fig. 8) et le chronogramme général (fig. 15) donnent un aperçu de la structure et du fonctionnement du système selon l'invention. Les moyens de stockage MS contiennent $m$ groupes de premières données numériques représentant les intensités lumineuses des éléments de $m$ images de maquette. Les moyens de calcul EC, à chaque période de balayage d'image Tv (fig. 15) du dispositif de visualisation V et pendant $n$ périodes successives Tc1,... Tcn, effectuent les calculs des intensités lumineuses des éléments de $n$ images de cibles et, outre des données XD, YD, ADE, N et M transfèrent les $n$ groupes de secondes données numériques SDN représentant ces images, dans $n$ moyens de mémorisation EM1,... EMn. Des moyens de mémorisation EM1,... EMn chacun à deux mémoires M1 et M2 montées «en bascule», reçoivent à chaque période de balayage Tv et après le calcul de la nième image, $n$ groupes de secondes données numériques et fournissent à un convertisseur numérique/analogique CDA les $n$ groupes de secondes données numériques reçues lors de la période Tv précédente. Cette dernière opération est effectuée au rythme du balayage d'image du dispositif de visualisation. Pendant la première période Tv représentée sur la fig. 15, les données numériques sont reçues, par exemple, dans les mémoires M1 pendant les temps d'écriture e1,... en, tandis que les incrustations sont effectuées par la lecture des données numériques contenues dans les mémoires M2 pendant les temps I1,... In. A la période Tv suivante, les rôles des mémoires M1 et M2 sont inversés. Un générateur d'image GI classique fournit un signal analogique d'image représentant l'image de paysage. Un système d'incrustation I classique reçoit les signaux analogiques d'images de cibles provenant du convertisseur CDA ainsi que le signal d'image de paysage. Il transmet tous ces signaux au dispositif de visualisation V en accordant la priorité aux signaux analogiques d'images de cible. Un pupitre de commande PC permet à l'instructeur chargé de conduire l'exercice de tir d'afficher les différents paramètres relatifs, par exemple, aux vitesses des cibles et au choix des itinéraires. Un ensemble de synchronisation S distribue à tous les circuits mentionnés les signaux classiques nécessaires. Le dispositif de visualisation V, du type «moniteur de télévision», fournit l'image finale formée par l'image de paysage dans laquelle sont incrustées les images de cibles.

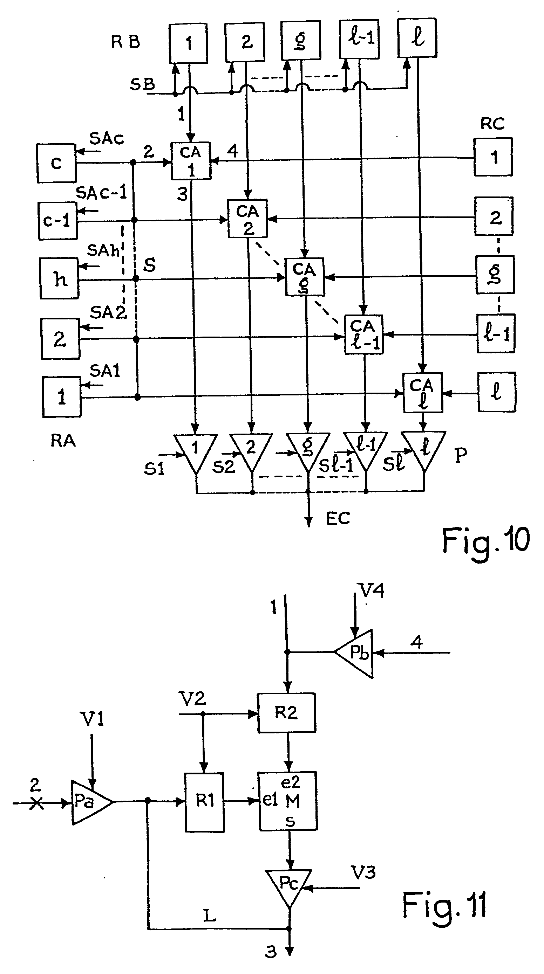

Le schéma général des moyens de calcul est représenté sur la fig. 9. Ils comprennent une unité centrale UC, une mémoire principale MP, des tables préenregistrées T et un opérateur spécialisé OS. Tous ces moyens sont reliés entre eux ainsi qu'aux autres circuits du système, par deux ensembles de liaison «par Bus», B1 et B2. La structure classique de ces liaisons ne présentant aucun intérêt pour la description de l'invention, dans un but de simplification, les échanges de données et de signaux sont représentés dans l'ensemble des schémas par des liaisons fonctionnelles équivalentes.

Les moyens de calcul, et plus particulièrement, l'unité centrale et la mémoire principale assurent différentes fonctions. Ils déterminent les valeurs des paramètres de calcul relatifs à chaque cible à savoir, entre autres: les coordonnées de la cible sur le terrain, sa distance $d$, le segment d'itinéraire sur lequel celle-ci se trouve, l'image de maquette correspondant à ce segment, la valeur $k$, les coordonnées $X_D$ et $Y_D$ du point de début d'incrustation. Ils appellent dans les moyens de stockage les permières données numériques correspondant à l'image de maquette sélectionnée. Toutes ces opérations ont lieu (fig. 16) durant une période Tp située au début de la période Tc relative à la cible considérée. Ils gèrent les calculs d'intensités des éléments d'image de cible pendant autant de périodes Te (Te 11, Te 12,... Te mn) consécutives et postérieures à la période Tp, qu'il y a d'éléments dans le troisième quadrillage relatif à l'image de cible considérée. Ils déterminent les dimensions des parcelles des premiers quadrillages pendant des périodes Ts situées au début de chaque période Te. Ils gèrent les calculs des intensités lumineuses des parcelles pendant une période T postérieure à la période Ts dans chaque période Te. Ils stockent successivement, à chaque période T, les données numériques calculées, et correspondant à chaque élément lumineux, pour former en fin de période Tc, le groupe de secondes données numériques représentant l'image de cible relative à la période Tc considérée. Ils fournissent aux ensembles de mémorisation, les coordonnées $X_D$ et $Y_D$, les adresses ADE d'écriture des secondes données numériques dans les mémoires, ainsi que les nombres de lignes N et d'éléments M de chaque image de cible.

Les tables de données T contiennent et fournissent les longueurs divisées par $k$ des traverses $a$ et des montants $b$ des parcelles de premier quadrillage en fonction des valeurs arrondies de $k$, $x$ et $y$.

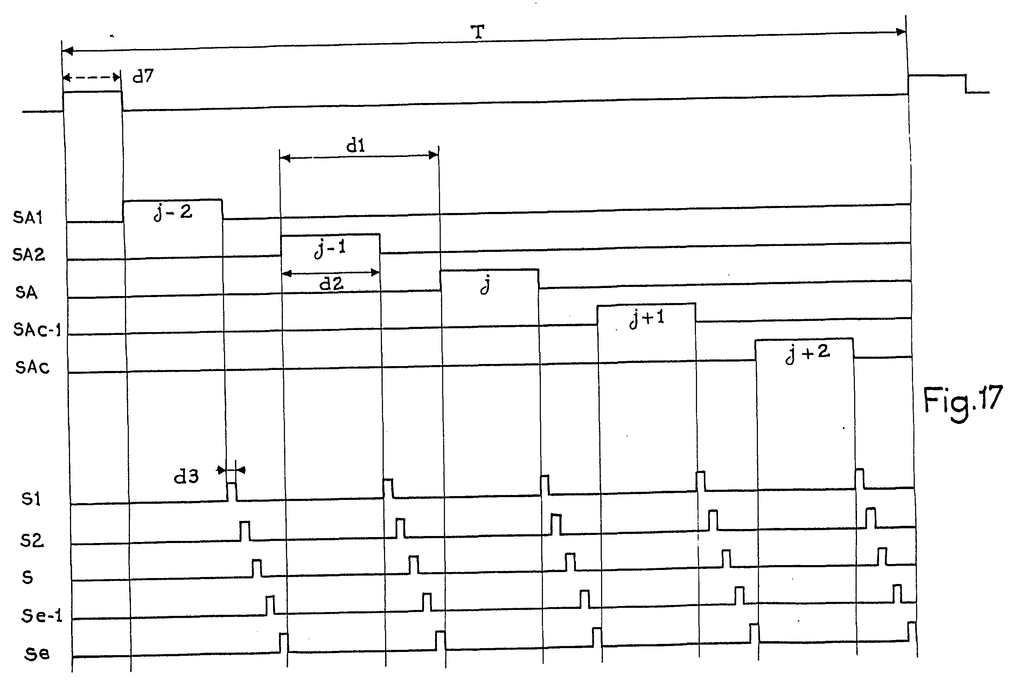

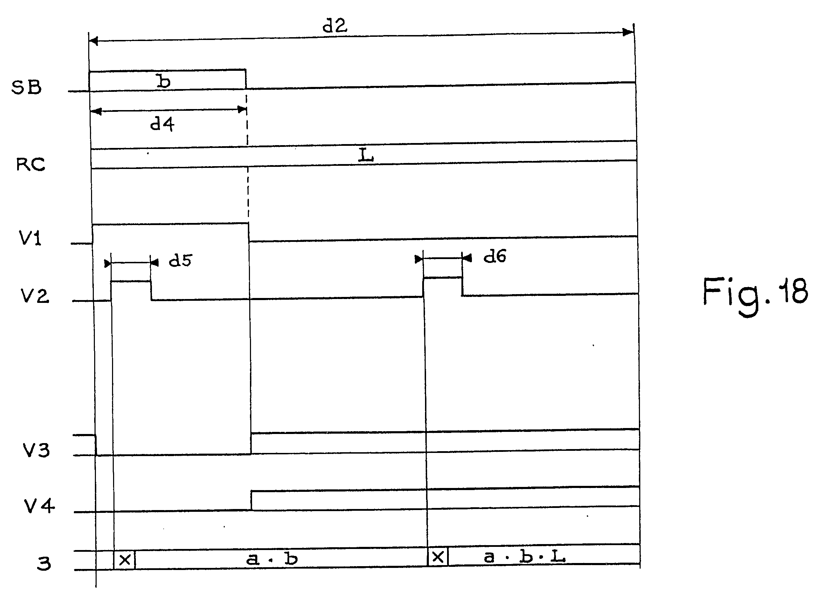

L'opérateur spécialisé câblé OS effectue, à chaque période T, les calculs des intensités lumineuses divisées par $k^2$, des parcelles du premier quadrillage délimitées par l'élément de troisième quadrillage auquel correspond la période T considérée. Les calculs successifs sont effectués en fonction des positions des parecelles dans la matrice de l'élément de troisième quadrillage. Les longueurs divisées par $k$ des traverses $a$ sont sélectionnées (fig. 17) successivement pendant $c$ périodes d2 situées en début de $c$ périodes d1 successives dans la période T. Les longueurs divisées par $k$ des montants $b$ sont sélectionnées simultanément (fig. 18) à chacune des périodes d4 situées en début des périodes d2. Le calcul d'intensité lumineuse de chaque parcelle comprend, (fig. 18), d'une part, pendant une période d5 incluse dans la période d4, le calcul de la surface de la parcelle divisée par $k^2$, ou premier produit, qui est effectué entre les deux longueurs divisées par $k$, de montant et de traverse de cette parcelle, et d'autre part, pendant une période d6 incluse dans la période d2 et postérieure à la période d4, le calcul de l'intensité cherchée, ou second produit, qui est effectué entre le premier produit et la luminance L de l'élément de premier quadrillage auquel appartient la parcelle considérées. Les I intensités calculées simultanément pour chaque colonne sont transférées, successivement durant I périodes d3 (fig. 17) en fin de période d1, à lunité centrale et à la mémoire principale, pour y former, en fin de période T, après additions successives, pour les $c$ colonnes, l'intensité lumineuse de l'élément de troisième quadrillage. A cette intensité correspond une des secondes données numériques.

Le schéma de l'opérateur spécialisé câblé est représenté sur la fig. 10. L'opérateur câblé spécialisé comprend: un premier registre RA comportant autant de cellules que de colonnes dans la matrice, un deuxième registre RB comportant autant de cellules que de lignes dans la matrice, un troisième registre RC comportant autant de cellules que de lignes dans la matrice, des circuits de calcul CA1,... CAI et des portes à trois états, P1,... PI en nombre égal au nombre de lignes. Dans l'exemple de réalisation de la fig.

10, k < 4, et par suite $c$ et l sont égaux à 5.

Les $c$ cellules du premier registre RA sont alimentées par l'unité centrale et la mémoire principale à chaque période d7. Elles contiennent les $c$ longueurs divisées par $k$, des traverses $a$ appartenant aux parcelles délimitées par l'élément de troisième quadrillage dont l'intensité est en cours de calcul. Elles fournissent ces longueurs, successivement, et sur une sortie commune S, pendant les périodes d2 comprises respectivement pendant les $c$ périodes d1, et sous l'action de signaux SA1, ... SAc. Les l cellules du deuxième registre RB sont alimentées par l'unité centrale et la mémoire principale à chaque période d7 et contiennent les l longueurs divisées par $k$ des montants $b$ des parcelles de l'élément dont l'intensité est en cours de calcul. Elles fournissent ces longueurs simultanément pendant la période d4 comprise dans chaque période d1 et sous l'action du signal SB. Les l cellules du troisième registre RC sont alimentées également par l'unité centrale et la mémoire principale à chaque période d7. Elles contiennent les l valeurs de luminance des parcelles contenues dans chacune des colonnes considérées successivement. Ces données de luminance sont disponibles en sortie des cellules dès que celles-ci sont alimentées. Chaque circuit de calcul CA possède une entrée 1 reliée exclusivement à la sortie d'une cellule du registre RB, une entrée 2 reliée à la sortie commune S du premier registre RA, une entrée 4 reliée exclusivement à une cellule du registre RC. Chaque circuit de calcul, affecté à une ligne, calcule pendant les $c$ périodes d2 comprises dans une période T, les premiers produits et les seconds produits relatifs aux $c$ parcelles de cette ligne et de l'élément relatif à la période T considérée; les l circuits de calcul, calculant simultanément à chaque période d2 les premiers produits puis les seconds produits relatifs aux l parcelles de chaque colonne de cet élément. Les portes P1, ... Pl dont les entrées sont reliées chacune à la sortie d'un circuit de calcul, sont auvertes successivement pendant les l périodes d3 situées en fin de chaque période d1. Leurs sorties sont reliées ensemble et acheminent ainsi, successivement à chaque période d1, les l seconds produits relatifs à une colonne, à l'unité centrale et à la mémoire principale.

Le schéma du circuit de calcul est représenté sur la fig. 11. Chaque circuit de calcul comprend un multiplieur M, deux cellules de registre R1 et R2 et trois portes Pa, Pb et Pc à trois états. Une liaison L est établie entre la sortie de la première porte Pa et la sortie de la troisième porte Pc. Le multiplieur fournit sur sa sortie $s$, le produit entre les données numériques qui lui sont présentées à ses deux entrées e1 et e2. Il effectue le premier produit $a$ . $b$ pendant la période d5 et le second produit $a$ . $b$ . L pendant la période d6. La première porte Pa dont l'entrée constitue l'entrée 2 du circuit de calcul, est ouverte par un signal V1 (fig. 18) présent pendant la période d4. Elle fournit les données $a$. La deuxième porte Pb a son entrée reliée à une cellule du registre Rc. Cette entrée constitue l'entrée 4 du circuit de calcul. Sa sortie est reliée à l'entrée du deuxième registre. Son ouverture est commandée par un signal V4 qui n'est présent qu'à chaque période d2 sauf pendant la période d4. Elle fournit la valeur de la luminance L. La troisième porte Pc a son entrée reliée à la sortie du circuit multiplieur. Sa sortie constitue la sortie 3 du circuit de calcul. Son ouverture est commandée par un signal V3 absent seulement pendant la période d4. Elle fournit d'abord le premier produit et ensuite le second produit. La première cellule R1 a son entrée reliée, d'une part, à la sortie de la première porte Pa et, d'autre part, à la sortie de la troisième porte Pc, par la liaison L. Elle enregistre et fournit à la première entrée e1 du multiplieur, sur commande d'un signal V2 (fig. 18) présent pendant les périodes d5 et d6, les données $a$ pendant la période d5 puis, pendant la période d6, le premier produit qui lui parvient par la liaison L. La seconde cellule R2 a une entrée qui constitue l'entrée 1 du circuit de calcul et qui est reliée à la sortie de la porte Pb. Elle enregistre et fournit à l'entrée e2 du multiplieur et sur commande du signal V2, les données $b$ pendant la période d5 puis la luminance L pendant la période d6.

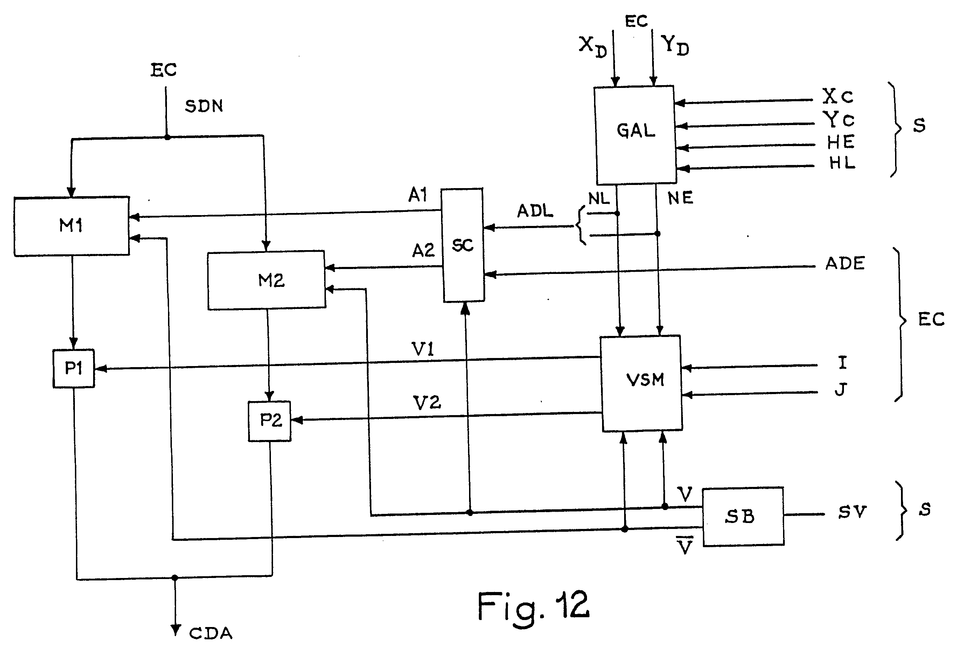

La fig. 12 représente le schéma d'un ensemble de mémorisation EM. Les mémoires M1 et M2 fonctionnent «en bascule»: lorsque l'une d'elles reçoit de l'ensemble de calcul les secondes données numériques SDN relatives à la prochaine période Tv de balayage d'image (fig. 15), l'autre fournit au convertisseur numérique/analogique CDA les secondes données numériques relatives à la période de balayage en cours. Ce type de fonctionnement est commandé par deux signaux, en opposition, V et $\overline{V}$ qui déterminent alternativement, à chaque période de balayage, laquelle des mémoires et en lecture et laquelle est en écriture. Les mémoires reçoivent de plus des signaux A1 et A2 constitués par les adresses successives des cases de mémoire, alternativement considérées pour la lecture et pour l'écriture. Les mémoires sont constituées par des circuits intégrés courants. En raison de la structure de ces circuits, les données numériques présentes à leurs sorties ne doivent être prises en compte que pendant les périodes où celles-ci constituent effectivement des données utiles. La transmission des données vers le convertisseur CDA est donc conditionnée par deux portes P1 et P2 commandées par deux signaux V1 et V2. Un générateur d'adresses de lecture GAL fournit à chaque période de balayage les adresses ADL successives de toutes les cases de mémoires. Ces adresses sont formées par un numéro de ligne NL et par un numéro NE d'éléments dans la ligne. Les adresses ADE pour l'écriture des données dans les mémoires sont fournies par l'ensemble de calcul. Un système de commutation SC, commandé par le signal V, transmet à chacune des mémoires, sous la forme des signaux A1 ou A2, et suivant l'état de la mémoire, soit les adresses de lecture ADL, soit les adresses d'écriture ADE. Un système VSM de validation de sortie de mémoire, fournit les signaux V1 et V2. Ces signaux commandent l'ouverture des portes P1 et P2 lorsque la mémoire à laquelle se rapporte la porte considérée est en cours de lecture et que les numéros de ligne NL et numéros d'élément NE sont simultanément inférieurs, respectivement, au nombre de lignes N et au nombre d'éléments lumineux M par ligne dans l'image considérée. Un système à bascule SB commandé par un signal SV, de période TV, fournit les deux signaux V et $\overline{V}$ en opposition de phase.

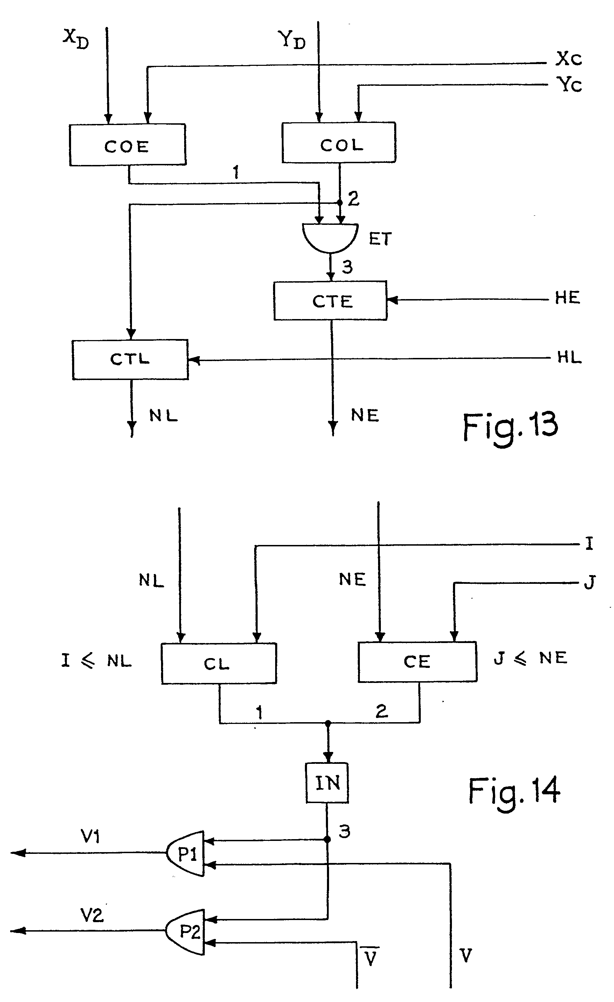

Le schéma du générateur GAL est représenté sur la fig. 13. Les coordonnés Xc et Yc, dans l'image de paysage, de l'élément balayé, sont comparées, à chaque instant, et respectivement, aux coordonnées $X_D$ et $Y_D$ du point de début d'incrustation dans cette image de paysage, de l'image de cible correspondant à l'ensemble de mémorisation considéré. Un comparateur COE fournit un signal 1 lorsque $X_C > X_D$. Un comparateur COL fournit un signal 2 lorsque $Y_C \geqslant Y_D$. Le signal 2 remet à zéro un compteur CTL et permet son incrémentation par un signal d'horloge HL au rythme du balayage des lignes. La capacité de ce compteur est supérieure au nombre de lignes le plus grand prévu pour une image de cible. Le contenu numérigue de ce compteur constitue, lorsqu'il est inférieur à N, un numéro NL qui détermine une ligne de l'image de cible à incruster. Lorsque les deux signaux 1 et 2 sont présents simultanément, un circuit ET fournit un signal 3 qui remet à zéro un compteur CTE et permet son incrémention par un signal d'horloge HE au rythme du balayage des éléments successifs dans une ligne. La capacité du compteur CTE est supérieure au nombre d'éléments le plus grand prévu dans une ligne de l'image de cible. Le contenu numérique de ce compteur constitue, lorsqu'il est inférieur à M, un numéro NE qui détermine un élément particulier dans la ligne déterminée par le numéro NL. Les signaux Xc, Yc, HE et HL proviennent du système de synchronisation.

Le schéma du système VSM de validation de sortie de mémoire est représenté sur la fig. 14. Un comparateur CL fournit un signal 1 lorsque le numéro de ligne NL est supérieur au nombre de lignes N dans l'image de cibles en cours de lecture. Un comparateur CE fournit un signal 2 lorsque le numéro d'élément NE est supérieur au nombre d'éléments M. Un signal 3 est fourni par un inverseur IN quand aucun des signaux 1 et 2 n'est présent aux sorties des comparateurs. Les signaux V1 et V2 commandent respectivement l'ouverture des portes P1 et P2. La porte P1 fournit le signal V1 lorsque le signal 3 et le signal V sont présents simultanément tandis que la porte P2 fournit le signal V2 lorsque le signal 3 et le signal $\overline{V}$ sont présents simultanément.

## Revendications

1. Système de production numérique d'images animées de cibles identiques, pour incrustation électronique dans une image de paysage, comprenant, entre autres, un dispositif d'incrustation (I), un générateur d'image de paysage (GI), un convertisseur de signal numérique/analogique (CDA), un dispositif de visualisation (V), des moyens de stockage (MS), des moyens de calcul (EC) et des moyens de mémorisation (EM1 à EMn), caractérisé en ce que, dans les moyens de stockage, un ensemble de m images de maquette, numérisées, sont rangées sous forme de m groupes de premières données numériques; chacune des images de maquette correspondant à une attitude particulière de la maquette; chacune des images de maquette étant assimilée à un ensemble d'éléments lumineux disposés suivant un premier quadrillage (1) et limité par un contour d'image de maquette, rectangulaire et exinscrit au contour de la cible considérée; chaque groupe de premières données numériques comprenant: le nombre de lignes (N), le nombre d'éléments par ligne (M), les valeurs des luminances des éléments du premier quadrillage; la cible étant supposée située, pour chaque image, à une distance de référence de l'observateur et vue par celui-ci au moyen d'une lunette réglée avec un grossissement de référence; en ce que les moyens de calcul définissent les itinéraires prédéterminés des cibles comme étant constituées respectivement par des lignes brisées formées de segments de droite jointifs pour chacun desquels l'attitude de la cible considérée est constante et pour chacun desquels, il correspond une image de maquette, et produisent pendant n périodes successives (Tc), comprises dans la période de balayage d'image (Tv) du dispositif de visualisation, n groupes de secondes données numériques représentant n images de cibles, puis, en fin de période (Tv), transfèrent les secondes données numériques à n moyens de mémorisation; les images de cibles étant assimilées à des ensembles d'éléments lumineux disposés suivant un deuxième quadrillage (fig. 3) identique au premier quadrillage mais limité par un contour homothétique du contour d'image de maquette suivant un premier rapport d'homothétie égal à l/k; la grandeur $k$ étant une fonction, d'une part, du rapport entre la distance effective de la cible simulée et la distance de référence, et d'autre part, du rapport entre le grossissement effectif de la lunette et le grossissement de référence; la détermination de chaque seconde donnée numérique, représentant l'intensité lumineuse d'un élément d'image de cible, consistant: à superposer au premier quadrillage, appartenant à l'image de maquette qui est associée à l'image de cible considérée, un troisième quadrillage (3) homothétique au deuxième quadrillage suivant un second rapport d'homothétie égal à $k$ et limité par un contour identique au contour d'image de maquette; et à égaler l'intensité lumineuse de chaque élément du deuxième quadrillage à la somme des intensités lumineuses, divisées par $k^2$, des éléments et des fractions d'éléments du premier quadrillage délimités par l'élément particulier du troisième quadrillage qui est l'homologue suivant le second rapport d'homothétie du deuxième quadrillage considéré, en ce que les moyens de mémorisation (EM1 à EMn), au nombre de $n$, et à chaque période de balayage d'image (Tv), reçoivent, des moyens de calculs et après calcul des $n$ images de cibles, $n$ groupes de secondes données numériques et fournissent au convertisseur numérique/analogique, au rythme du balayage du dispositif de visualisation et pendant les intervalles de temps d'incrustation correspondant aux emplacements déterminés dans l'image de paysage pour les images de cibles, $n$ autres groupes de secondes données numériques reçus lor de la période de balayage d'image précédente; le signal analogique résultant étant transmis au dispositif d'incrustation (I).

2. Système de production numérique d'images selon la revendication 1, dans lequel les moyens de calcul comprennent une unité centrale (UC), une mémoire principale (MP), des tables de données (T) et un opérateur spécialisé (OS) câblé caractérisé en ce que l'unité centrale et la mémoire principale déterminent les paramètres de cible pendant une période TP initiale dans la période Tc relative à la cible considérée; effectuent les calculs des intensités lumineuses des éléments d'une image de cible pendant autant de périodes Te consécutives et postérieures à la période TP, dans la période Tc, qu'il existe d'éléments dans le troisième quadrillage; déterminent chaque élément de troisième quadrillage pendant une période Ts initiale dans la période Te; gèrent le calcul des intensités lumineuses des éléments et fractions d'éléments du premier quadrillage, ou parcelles, pendant une période T comprise dans la période Te et postérieure à la période Ts; le calcul étant effectué, en fonction des positions des parcelles dans l'élément du troisième quadrillage, dans l'ordre des $c$ colonnes et dans chaque colonne simultanément pour les I lignes; stockent successivement à chaque période T les données numériques calculées pour former en fin de période Tc le groupe de secondes données numériques représentant l'image de cible; en ce que les tables de données préenregistrées fournissent les longueurs, divisées par $k$, des côtés des parcelles appelés traverses dans le sens des lignes, et montants dans le sens des colonnes, en fonction des valeurs arrondies de $k$ et des coordonnées $x$ et $y$ du centre de l'élément de troisième quadrillage par rapport à l'élément particulier de premier quadrillage à l'intérieur duquel ce centre se trouve situé, et en ce que l'opérateur spécialisé câblé effectue, durant chaque période T, les calculs des intensités lumineuses, divisées par $k^2$, des parcelles correspondant à un élément de troisième quadrillage.

3. Système de production numérique d'images, selon la revendication 2, caractérisé en ce que l'opérateur spécialisé câblé comprend:
— un premier registre (RA), à $c$ cellules, qui reçoit de l'unité centrale et de la mémoire principale, pendant une période d7, initiale dans la période T, les $c$ longueurs divisées par $k$ des traverses relatives à l'élément du troisième quadrillage en cours de calcul, et qui fournit successivement ces longueurs sur une sortie commune pendant $c$ périodes d2 situées en début de $c$ périodes d1 successives et postérieures à la période d7;
— un deuxième registre (RB), à I cellules, qui reçoit de l'unité centrale et de la mémoire principale, pendant la période d7, les longueurs divisées par $k$ des montants relatifs à l'élément du troisième quadrillage en cours de calcul et qui fournit simultanément sur I sorties, les I longueurs des montants pendant une période d4 située en début de chaque période d2;
— un troisième registre (RC), à I cellules, qui reçoit de l'unité centrale et de la mémoire principale, à chaque période d7 les I valeurs de luminance des parcelles contenues dans les colonnes successives et qu'il fournit dès qu'il les a reçues;
— des circuits de calcul (CA1 à CAI), en nombre égale au nombre de lignes; possédant chacun trois entrées reliées respectivement, à la sortie commune du premier registre, à la sortie d'une cellule du deuxième registre et à la sortie d'une cellule du troisième registre; effectuant successivement les calculs des intensités lumineuses, divisées par $k^2$, des parcelles situées dans la ligne à laquelle chacun d'eux est affecté et possédant une sortie qui fournit les valeurs calculées;
— des portes (P1 à PI) en nombre égal à celui des circuits de calcul, dont les entrées sont reliées respectivement aux sorties des circuits de calcul, ouvertes successivement pendant I périodes d3 postérieures à la période d2 dans chaque période d1; lors sorties étant reliées ensemble et acheminant les intensitées des parcelles à l'unité centrale et à la mémoire principale.

4. Système de production numérique d'images, selon la revendication 3, caractérisé en ce que chaque circuit de calcul comprend:
— une première porte (Pa) dont l'entrée est reliée à la sortie commune du premier registre et dont l'ouverture est commandée par un signal présent pendant la période d4;
— une deuxième porte (Pb) dont l'entrée est reliée à une des cellules du troisième registre, dont la sortie est reliée à l'entrée du circuit de calcul qui est reliée au second registre et dont l'ouverture est commandée par un signal présent pendant la période d2 sauf pendant la période d4;
— une trosième porte (Pc) dont la sortie est reliée à la sortie du circuit de calcul et dont l'ouverture est commandée par un signal absent seulement pendant la période d4;
— une liaison entre la sortie de la première porte et la sortie de la troisième porte;
— un circuit multiplieur (M) à deux entrées et une sortie;
— une première cellule de registre (R1) dont l'entrée est reliée à la sortie de la première porte et qui enregistre et fournit à une entrée du multiplieur les données qu'elle reçoit, sur commande d'un signal présent pendant une période d5 comprise dans la période d4 et pendant une période d6 postérieure à la période d4 dans la période d2;

— une seconde cellule de registre (R2) dont l'entrée est reliée à l'entrée du circuit de calcul qui est reliée au deuxième registre; qui enregistre et fournit à l'autre entrée du multiplieur les données qu'elle reçoit, sur commande d'un signal présent pendant les périodes d5 et d6.

5. Système de production numérique d'images selon la revendication 1, caracterisé en ce que chaques moyen de mémorisation comprend:

— deux mémoires (M1, M2) qui, à tour de rôle et à chaque cycle de calcul, reçoivent les secondes données numériques calculées durant le cycle considéré et fournissent les secondes données numériques calculées durant le cycle précédent; une porte étant placée en sortie de chacune des mémoires;

— un générateur d'adresse de lecture (GAL), qui fournit successivement les numéros de ligne et numéros d'élément par ligne des elements d'image de cible à incruster;

— un système de commutation (SC), qui oriente vers chacune des mémoires et suivant leurs états respectifs (lecture/écriture) soit les numéros de ligne et les numéros d'élément par ligne, qui forment les adresses de lecture, soit les adresses d'écriture reçues des moyens de calcul;

— un système de validation (VSM), qui n'ouvre les portes de sortie des mémoires que lorsque les données que celles-ci fournissent, sont des données utiles;

— un système à bascule (SB), qui est commandé par un signal de synchronisation dont la période est égale à la période de balayage d'image et qui fournit deux signaux en opposition de phase qui commandent les deux mémoires, le système de commutation et le système de validation.

6. Système de production numérique d'images selon la revendication 5, caracterisé en ce que chaque générateur d'adresses de lecture comprend:

— un premier comparateur (COE) qui compare l'abscisse $X_D$ du point de début d'incrustation avec l'abscisse $X_C$ du point de l'écran du dispositif de visualisation en cours de balayage et qui fournit un signal 1 lorsque $X_C \geqslant X_D$;

— un second comparateur (COL) qui compare l'ordonnée $Y_D$ du point de début d'incrustation avec l'ordonnée $Y_C$ du point de l'écran en cours de balayage et qui fournit un signal 2 lorsque $Y_C \geqslant Y_D$;

— un premier compteur (CTL), remis à àzéro et déclenché par le signal 2, et incrémenté par un signal d'horloge à la fréquence de lignes, qui fournit les numéros de ligne des éléments d'image de cible à incruster;

— un second compteur (CTE), remis à zero et déclenché par un signal 3 résultant des présences simultanées du signal 1 et du signal 2, et incrémenté par un signal d'horloge à la fréquence des éléments par ligne, qui fournit les numéros des éléments d'image de cible à incruster dans les lignes déterminées par les numéros de ligne.

7. Système de production numérique d'images selon la revendication 5, caractérisé en ce que chaque système de validation comprend:

— un premier comparateur (CL) qui compare le numéro de ligne NL avec le nombre de lignes I dans l'image de cible et qui fournit un signal 1 lorsque $NL \geqslant I$;

— un second comparateur (CE) qui compare le numéro d'élément NE avec le nombre d'éléments J par ligne et qui fournit un signal 2 lorsque $NL \geqslant J$;

— un circuit inverseur (IN) qui fournit un signal 3 lorsqu'aucun des signaux 1 et 2 n'est présent;

— deux portes «ET» (P1, P2) alimentées toutes deux par le signal 3 et chacune exclusivement par un des deux signaux en opposition fournis par le système à bascule et qui fournissent chacune un signal de validation ouvrant une des portes en sortie des mémoires.

**Patentansprüche**

1. System zur digitalen Erzeugung bewegter Bilder identischer Ziele für die elektronische Einblendung in das Bild einer Landschaft mit u.a. einer Einblendvorrichtung (I), einem Bilderzeuger für die Landschaft (GI), einem Digital-Analogwandler (CDA), einem Sichtgerät (V), Speichermitteln (MS), Rechenmitteln (EC) und Speicherungsmitteln (EM1 bis EMn), dadurch gekennzeichnet, dass in den Speichermitteln m digitalisierte Modellbilder in der Form von m Gruppen erster digitaler Daten angeordnet sind, wobei jedes dieser Modellbilder einer bestimmten Ansicht des Modells entspricht und einem Satz von Leuchtelmenten gemäss einem ersten Raster (1) assimiliert ist, das durch die Konturen des Modellbilds begrenzt ist, rechteckig ist und die Kontur des betrachteten Ziels umgreift, wobei jede Gruppe erster digitaler Daten die Anzahl der Zeilen (N), die Anzahl der Elemente pro Zeile (M), den Wert der Leuchtrkraft der Elemente des ersten Resters enthält und das Ziel als für jedes Bild in einer Bezugsentfernung vom Beobachter liegend und vom Beobachter mittels einer eingestellten Optik mit einer Bezugsvergrösserung gesehen angenommen wird, dass die Rechenmittel die vorbestimmten Wege der Ziele definieren, die aus gebrochenen Linien bestehend aus aneinandergefügten Geradenstücken gebildet werden, wobei für jedes Stück die Ansicht des betrachteten Ziels konstant ist und jedem Weg ein Modellbild entspricht und wobei die Rechenmittel während n aufeinanderfolgender Perioden (Tc), die in der Bildabtastperiode (Tv) des Sichtgeräts enthalten sind, n Gruppen zweiter digitaler Daten erzeugen, die n Bildern des Ziels entsprechen, dann am Ende der Periode (Tv) die zweiten digitalen Daten an n Speicherungsmittel übertragen, dass die Bilder der Ziele Sätzen von Leuchtelementen gemäss einem zweiten Raster (Fig. 3) assimiliert sind, das dem ersten Raster gleicht, aber durch eine zur Bildkontur des Modells gemäss einem ersten Homothetieverhältnis 1/k homothetische Kontur begrenzt ist, wobei der Wert k eine Funktion einerseits des Verhältnisses zwischen der effektiven Entfernung des Ziels und der Bezugsentfernung und andererseits des Verhältnisses zwischen der effektiven Vergrösserung der Optik und der Bezugsvergrösserung ist, dass zur Bestimmung jedes zweiten digitalen Datensatzes, der die Leuchtkraft eines Bildelements des Ziels angibt, dem ersten Raster, das dem dem Bild des betrachteten Ziels zugeordneten Modellbild angehört, ein drittes Rester (3) überlagert wird, das zum zweiten Raster gemäss einem zweiten Homothetieverhältnis k homothetisch ist und das von einer Kontur gleich der Kontur des Modellbilds begrenzt ist, und die Leuchtkraft jedes Elements des zweiten Rasters der Summe geteilt durch $k^2$ der Leuchtkräfte der Elemente und Bruchteile von Elementen des ersten Rasters gleichgesetzt sind, die vom bestimmten Element des dritten Rasters begrenzt werden, welches nach dem zweiten Homothetieverhältnis dem zweiten betrachteten Raster entspricht und dass die Speicherungsmittel (EM1 bis EMn), n an der Zahl, zu jeder Bildabtastperiode (Tv) von den Rechenmitteln und nach Errechnung der n Zielbilder n Sätze von zweiten digitalen Daten zugeführt erhalten und dem Digitalanalogwandler im Takt der Abtastung des Sichtgeräts und während der Einblendungsintervalle, die den bestimmten Stellungen der Zielbilder im Landschaftsbild entsprechen, n weitere Sätze von zweiten digitalen Daten liefern, die während der vorhergehenden Bildabtastperiode empfangen worden waren, wobei das resultierende Analogsignal der Einblendvorrichtung (I) zugeführt wird.

2. System zur digitalen Bilderzeugung nach Anspruch 1, in dem die Rechenmittel eine Zentraleinheit (UC), einen Hauptspeicher (MP), Datentabellen (T) und einen spezialisierten fest verkabelten Operator aufweisen, dadurch gekennzeichnet, dass die Zentraleinheit und der Hauptspeicher die Parameter der Ziels während einer Anfangsperiode TP in der auf das betrachtete Ziel bezogenen Periode Tc bestimmen, die Berechnungen der Leuchtkraft der Bildelemente des Ziels während so vieler aufeinanderfolgender und auf die Periode TP folgender Perioden Te innerhalb der Periode Tc durchführen, wie Elemente im dritten Raster vorhanden sind, jedes Element des dritten Rasters während einer Anfangsperiode Ts innerhalb der Periode Te bestimmen, die Berechnung der Leuchtkraft der Elemente und Teile von Elementen des ersten Rasters, oder Parzellen, während einer innerhalb der Periode Te und nach der Periode Ts liegenden Periode T bearbeiten und nach den Berechnungen abhängig von den Positionen der Parzellen im Element des dritten Resters in der Reihenfolge der c Spalten und in jeder Spalte gleichzeitig für die e Zeilen nacheinander in jeder Periode T die berechneten digitalen Daten speichern, um am Ende der Periode Tc den Satz zweiter digitaler Daten zu bilden, der das Bild des Ziels darstellt, dass die vorregistrierten Datentabellen die Länge geteilt durch k der Seiten der Parzellen, Querstrecken in Richtung der Zeilen und Höhenstrecken in Richtung der Spalten genannt, abhängig von den abgerundeten Werten von k und den Koordinaten x und y des Mittelpunkts des Elements des dritten Rasters bezüglich eines besonderen Elements des ersten Rasters liefern, innerhalb dessen dieser Mittelpunkt sich befindet, und das der spezialisierte fest verkabelte Operator während jeder Periode T die Berechnungen der Leuchtkraft, geteilt durch $k^2$, der Parzellen durchführt, die einem Element des dritten Rasters entsprechen.

3. System zur digitalen Bilderzeugung nach Anspruch 2, dadurch gekennzeichnet, dass der spezialisierte fest verkabelte Operator umfasst:
— ein erstes Register (RA) mit c Zellen, das von der Zentraleinheit und dem Hauptspeicher während einer Periode d7 zu Beginn der Periode T die c Längen geteilt durch k der Querstrecken bezüglich des Elements des gerade berechneten dritten Rasters zugeführt erhält und nacheinander die Längen über einen gemeinsamen Ausgang während c Perioden d2 zu Beginn von c aufeinanderfolgenden und auf die Periode d folgenden Perioden liefert;
— ein zweites Register (RB) mit e Zellen, das von der Zentraleinheit und dem Hauptspeicher während der Periode d7 die Längen geteilt durch k der das Element des gerade berechneten Rasters betreffenden Höhenstrecken zugeführt erhält und gleichzeitig an e Ausgängen die e Längen der Höhenstrecken während einer Periode d4 zu Beginn jeder Periode d2 ausgibt;
— ein drittes Register (RC) mit e Zellen, das von der Zentraleinheit und dem Hauptspeicher in jeder Periode d7 die e Werte der Leuchtkraft der in den aufeinanderfolgenden Spalten enthaltenen Parzellen zugeführt erhält und sie wieder ausgibt, sobald es sie erhalten hat;
— Rechenschaltkreise (CA1 bis CAl) in einer Menge, die der Anzahl der Zeilen entspricht, wobei diese Rechenkreise je drei Eingänge aufweisen, die an den gemeinsamen Ausgang des ersten Registers, an den Ausgang einer Zelle des zweiten Registers bzw. an den Ausgang einer Zelle des dritten Registers angeschlossen sind, die nacheinander die Berechnungen der Leuchtkraft geteilt durch $k^2$ der in derjenigen Zeile liegenden Parzellen durchführt, der jeder von ihnen zugeordnet ist, und die einen Ausgang besitzen, der die berechneten Werte liefert;
— Tore (P1 bis Pl) in einer Menge, die der Anzahl der Rechenkreise entspricht, wobei die Eingänge der Tore an die Ausgänge der Rechenschaltkreise angeschlossen sind und

nacheinander während e auf die Periode d2 in jeder Periode d1 folgenden Perioden d3 geöffnet sind und wobei die Ausgänge dieser Tore miteinander verbunden sind und die Leuchtkraftwerte der Parzellen an die Zentraleinheit und den Hauptspeicher übertragen.

4. System zur digitalen Bilderzeugung nach Anspruch 3, dadurch gekennzeichnet, dass jeder Rechenschaltkreis enthält:

— ein erstes Tor (Pa), dessen Eingang an den gemeinsamen Ausgang des ersten Registers angeschlossen ist und das von einem während der Periode d4 vorliegenden Signal aufgesteuert wird;

— ein zweites Tor (Pb), dessen Eingang an eine der Zellen des dritten Registers angeschlossen ist, dessen Ausgang mit dem Einbang des Rechenschaltkreises, der an das zweite Register angeschlossen ist, verbunden ist und das durch ein während der Periode d2 ausgenommen während der Periode d4 vorhandenes Signal aufgesteuert wird;

— ein drittes Tor (Pc), dessen Ausgang an den Ausgang des Rechenschaltkreises angeschlossen ist und das von einem Signal aufgesteuert wird, das nur während der Periode d4 nicht vorliegt;

— eine Verbindung zwischen dem Ausgang des ersten Tores und dem Ausgang des dritten Tores;

— einen Multiplizierschaltkreis (M) mit zwei Eingängen und einem Ausgang;

— eine erste Registerzelle (R1), deren Eingang an den Ausgang des ersten Tores angeschlossen ist und die die empfangenen Daten speichert und an einen Eingang des Multiplizierers unter Steuerung durch ein Signal ausgibt, das während einer Periode d5 innerhalb der Periode d4 vorliegt sowie während einer Periode d4 in der Periode d2;

— eine zweite Registerzelle (R2), deren Eingang an den Eingang des Rechenschaltkreises, der mit dem zweiten Register verbunden ist, angeschlossen ist, die die empfangenen Daten registriert und an den anderen Eingang des Multiplizierers unter Steuerung durch ein Signal liefert, das während der Perioden d5 und d6 vorliegt.

5. System zur digitalen Bilderzeugung nach Anspruch 1, dadurch gekennzeichnet, dass jedes Speicherungsmittel umfasst:

— zwei Speicher (M1, M2), die abwechselnd und in jedem Rechenzyklus die zweiten während des betrachteten Zyklus berechneten Daten zugeführt erhalten und die zweiten während des vorhergehenden Zyklus berechneten digitalen Daten ausgeben, wobei ein Tor am Ausgang jedes der Speicher liegt;

— einen Lese-Adressengenerator (GAL), der nacheinander die Nummern der Zeile und die Elementnummern pro Zeile der Bildelemente des einzublendenden Ziels liefert;

— ein Schaltsystem (SC), das auf jeden der Speicher und gemäss ihrem augenblicklichen Zustand (Lesen/Schreiben) entweder die Nummern der Zeile oder die Nummern des Elements pro Zeile, die die Leseadressen bilden, oder die von den Rechenmitteln empfangenen Schreibadressen richtet;

— ein Steuersystem (VSM), das die Ausgangstore der Speicher nur öffnet, wenn die Daten, die sie liefern, nützliche Daten sind;

— ein Kippstufensystem (SB), das von einem Synchronisationssignal gesteuert wird, dessen Periode gleich der Bildabtastperiode ist und das zwei in Phasenopposition liegende Signale zur Steuerung der beiden Speicher, des Schaltsystems und des Steuersystems liefert.

6. System zur digitalen Bilderzeugung nach Anspruch 5, dadurch gekennzeichnet, dass jeder Lese-Adressengenerator umfasst:

— einen ersten Komparator (COE), der die Abszisse $X_D$ des Anfangspunktes der Einblendung mit der Abszisse $X_C$ des gerade abgetasteten Punktes des Bildschirms des Sichtgeräts vergleicht und ein Signal 1 liefert, wenn $X_C \geqslant X_D$ ist;

— einen zweiten Komparator (COL), der die Ordinate $Y_D$ des Anfangspunktes der Einblendung mit der Ordinate $Y_C$ des gerade abgetasteten Punktes des Bilschirms vergleicht und ein Signal 2 liefert, wenn $Y_C \geqslant Y_D$ ist;

— einen ersten Zähler (CTL), der vom Signal 2 auf Null gesetzt und ausgelöst wird und von einem Taktsignal mit der Zeilenfrequenz inkrementiert wird sowie Zeilennummern der Bildelemente des einzublendenden Ziels liefert;

— einen zweiten Zähler (CTE), der von einem Signal 3, das bei gleichzeitig vorliegenden Signalen 1 und 2 gebildet wird, auf Null gesetzt und ausgelöst wird und von einem Taktsignal der Frequenz der Elemente pro Zeile inkrementiert wird sowie die Elementennummern des einzublendenden Zielbildes in den Zeilen liefert, die durch die Zeilennummern bestimmt sind.

7. System zur digitalen Bilderzeugung nach Anpruch 5, dadurch gekennzeichnet, dass jedes Steuersystem umfasst:

— einen ersten Komparator (CL), der die Nummer der Zeile NL mit der Anzahl Zeilen I im Bild des Ziels vergleicht und ein Signal 1 liefert, wenn NL $\geqslant$ I ist;

— einen zweiten Komparator (CE), der die Elementennummern NE mit der Anzahl der Elemente J pro Zeile vergleicht und ein Signal 2 liefert, wenn NE $\geqslant$ J ist;

— einen ersten Inverter (IN), der ein Signal 3 liefert, wenn keines der Signale 1 und 2 vorliegt;

— zwei UND-Tore (P1, P2), die beide vom Signal 3 angesteuert werden und je von einem der in Phasenopposition liegenden Signale, die vom Kippstufensystem geliefert werden, angesteuert werden und die je ein Steuersignal liefern, das eines der Tore am Ausgang der Speicher öffnet.

## Claims

1. A system for digitally producing moving pictures of identical targets which are to be inserted into a landscape picture, comprising among others an insertion device (I), a landscape picture generator (GI), a digital/analog signal converter (CDA), a visualisation device (V), memory means (MS), computation means (EC) and memorisation means (EM1 to EMn), characterised in that a set of n digital model pictures are arranged in the memory means in the form of m groups of first digital data, each model picture corresponding to a particular attitude of the model and being assimilated to a set of light elements disposed according to a first square pattern (1) limited by a model picture contour which is rectangular and circumscribes the contour of the considered target, each set of first digital data comprising the number of lines (N), the number of elements per line (M), the luminance values of the elements of the first square pattern; the target being supposed to be situated for each picture at a reference distance away from the observer and seen by him through an adjusted telescope having a reference magnifyng power; that the computation means define the predetermined itineries of the targets which are respectively constituted by broken lines made up of joined segments, the attitude of the target remaining constant over the length of each segment and a model picture corresponding to each of them    that the computation means produce, during n successive periods (Tc) included in the picture scanning period (Tv) of the visualisation device, n sets of second digital data representing n target pictures, then, at the end of period (Tv), transfer the second digital data to n memorisation means, the target pictures being assimilated to se s of light elements disposed according to a second square pattern ( fig. 3) identical to the first one but limited by a contour which is homothetic to the contour of the model picture according to a first homothetic ratio equal to 1/k, the value k depending on the one hand on the ratio between the real distance of the simulated target and the reference distance, and on the other hand on the ratio between the real magnifying power of the telescope and the reference magnifying power; the determination of each second digital data, representing the brightness of a target picture element, consisting in superposing to the first square pattern, belonging to the model picture associated to the considered target picture, a third square pattern (3) which is homothetic to the second square pattern according to a second homothetic ratio equal to k and limited by a contour which is identical to the contour of the model picture, and in rendering the brightness of each element of the second square pattern equal to the sum of the brightness, divided by $k^2$, of the elements and fractions of elements of the first square pattern which are delimited by the particular element of the third square pattern, homologeous to the considered second square pattern according to a second homothetic ratio, and that the n memorisation means (EM1 to EMn) receive at each picture scanning period (Tv) from the computation means and after the computation of the n target pictures n sets of second digital data and furnish to the digital/analog converter, at the scan rhythm of the visualisation device and during the insertion time intervals corresponding to the determined places in the landscape picture for the target pictures, n other sets of second digital data which had been received during the preceding picture scanning period, the resulting analog signal being transmitted to the insertion device (I).

2. A system for digitally producing pictures according to claim 1, in which the computation means comprise a central unit (UC), a main memory (MP), data tables (T) and a wired specialized operator (OS), characterized in that the central unit and the main memory determine the target parameters during an initial period TP included in the period Tc relative to the considered target; effect the brightness computations for the elements of a target picture during as many consecutive periods Te and following to the period TP within the period Tc as there exist elements in the third square pattern; determine each element of the third square pattern during an initial period Ts within the period Te; treat the brightness computation for the elements and fractions of elements of the first square pattern or plots during a period T which is included in the period Te and which is subsequent to the period Ts; the computation being realized in dependence of the position of the plots in the element of the third square pattern in the order of the c columns and in each column simultaneously for the e lines; memorize successively in each period T the computed digital data in order to constitute at the end of the period Tc the set of seiond digital data representing the target picture, that the tables of preregistered data furnish the lengths, divided by k of the sides of the plots, called transverse sides in the direction of the lines and mounting sides in the direction of the columns, in dependence of the rounded up values of k and of the coordinates x and y of the element center of the third square pattern with respect to the particular element of the first square pattern inside which this center is situated, and that the wired specialized operator performs during each period T the brightness computation divided by $k^2$ of the plots corresponding to an element of the third square pattern.

3. A system for digitally producing pictures according to claim 2, characterized in that the wired specialized operator comprises:
— a first register (RA) having c cells and receiving from the central unit and the main memory, during a period d7 which is initial inside the period T, the c lengths divided by k of the transverse sides relating to the actually computed element of the third square pattern and furnishing successively the lengths to a common output during p periods d2 situated at the beginning of c successive periods d1 which are subsequent to the period d7;

— a second register (RB) having e cells, receiving from the central unit and the main memory during the period d7 the lengths divided by k of the mounting sides relative to the actually computed element of the third square pattern and furnishing simultaneously on e outputs the e lengths of the mounting sides during a period d4 which is situated at the beginning of each period d2;

— a third register (RC), having e cells, receiving frome the central unit and from the main memory at each period d7 the e brightness values of the plots included in the successive columns, and delivers the values as soon as it has received them;

— computation circuits (CA1 to CAl), the number of which corresponds to the number of lines, which comprise each three inputs connected respectively to the common output of the first register, to the output of a cell of the second register and to the output of a cell of the third register, which perform successively the brightness computations divided by k² of the plots situated on the line to which each of them is affected, and which has an output furnishing the computed values;

— gates (P1 ao Pl), the number of which is equal to that of the computation circuits, the inputs of which are connected respectively to the outputs of the computation circuits, successively open during e periods d3 subsequent to the period d2 within each period d1, and the outputs of which are interconnected and transmit the brightness of the plots to the central unit and to the main memory.

4. A system for digitally producing pictures according to claim 3, characterized in that each computation circuit comprises:

— a first gate (Pa), the input of which is connected to the common output of the first register and the opening of which is commanded by a signal present during the period d4;

— a second gate (Pb), the input of which is connected to one of he cells of the third register, the output of which is connected to the input of the computation circuit connected to the second register, and the opening of which is commanded by a signal which is present during the period d2 except during the period d4;

— a third gate (Pc), the output of which is connected to the output of the computation circuit and the opening of which is commanded by a signal which is absent only during the period d4;

— a connection between the output of the first gate and the output of the third gate;

— a multiplier circuit (M) having two inputs and one output;

— a first register cell (S1), the input of which is connected to the output of the first gate and which registers and furnishes to an input of the multiplier the received data upon command by a signal which is present during a period d5 included in the period d4 and during a period d6 subsequent to the period d4 within the period d2;

— a second register cell (R2), the input of which is connected to the input of the one computation circuits which connected to the second register, which cell registers and furnishes to the other input of the multiplier the received data upon command by a signal which is present during the periods d5 and d6.

5. A system for digitally producing pictures according to claim 1, characterized in that each memorisation means comprises:

— two memoires (M1, M2) which receive alternatively and for each computation cycle the second digital data which have been computed during the considered cycle, and which furnish the second digital data computed during the preceding cycle, a gate being placed at the output of each of the memories;

— a read address generator (GAL) furnishing successively the line numbers and the element numbers per line of the target picture elements which are to be inserted;

— a swich system (SC) transmitting to each of the memories and according to their respective states (read/write) either the line numbers and the element numbers per line constituting the read addresses, or the write addresses received from the computation means;

— a validation system (VSM), which opens the output gates of the memoires only when the date furnished by the memories are useful data;

— a flip flop system (SB) which is commanded by a synchronisation signal, the period of which is equal to the picture scanning period and which furnishes two signals in phase opposition relation commanding the two memories, the switch system and the validation system.

6. A system for digitally producing pictures according to claim 5, characterized in that each read address generator comprises:

— a first comparator (COE) comparing the abscissa $X_D$ of the insertion start point with the abscissa $X_C$ of the actually scanned point on the screen of the visualisation device and which furnishes a signal 1, if $X_C \geq X_D$;

— a second comparator (COL) comparing the ordinate $Y_D$ of the insertion start point with the ordinate $Y_C$ of the actually scanned point on the screen and which furnishes a signal 2, if $Y_C \geq Y_D$;

— a first counter (CTL) which is reset to zero and started by the signal 2 and which is incremented by a clock signal at the line frequency, this counter furnishing the line numbers of the target picture elements which are to be inserted;

— a second counter (CTE) which is reset to zero and started by a signal 3 resulting from the simultaneous presence of the signal 1 and the signal 2 and which is incremented by a clock signal at the frequency of the line element, this counter furnishing the element numbers inside the lines determined by the line number of the target picture which is to be inserted.

7. A system for digitally producing pictures according to claim 5, characterized in that each validation system comprises:
— a first comparator (CL) which compares the line number NL with the number of lines I in the target picture and which furnishes a signal 1, if $NL \geqslant I$;

— a second comparator (CE), which compares the element number NE with the number of elements J per line and which furnishes a signal 2, if $NE \geqslant J$;
— an inverter circuit (IN). which furnishes a signal 3, if neither the signal 1 nor the signal 2 is present;
— two And-gates (P1, P2), which are fed both by the signal 3 and each of them exclusively by one of the two signals in opposite phase relationship furnished by the flip flop system, these gates furnishing each a validation signal for opening one of the gates at the output of the memories.

Fig.1

Fig.2

Fig. 3

Fig.4

Fig.5

Fig.6

| $x =$ | 0 | | $1 - \dfrac{k}{2}$ | $\dfrac{k}{2}$ | 1 |
|---|---|---|---|---|---|
| $a(j-2)$ | | | 0 | | |
| $a(j+2)$ | | | 0 | | |
| $a(j-1)$ | $\dfrac{k}{2} - x$ | | | 0 | |
| $a(j+1)$ | 0 | | | $x + \dfrac{k}{2} - 1$ | |
| $aj$ | $x + \dfrac{k}{2}$ | | 1 | $1 - x + \dfrac{k}{2}$ | |

Fig.7

Fig.9

Fig. 8

Fig. 10

Fig. 11

Fig. 12

Fig. 13

Fig. 14

Fig.16

Fig.15

Fig.17

0 027 766

Fig.18